Europäisches Patentamt

European Patent Office

Office européen des brevets

(11) Publication number: **0 066 344**
**B1**

# (12) EUROPEAN PATENT SPECIFICATION

(45) Date of publication of patent specification: **31.07.85**

(21) Application number: **82200657.3**

(22) Date of filing: **28.05.82**

(51) Int. Cl.⁴: **A 01 B 49/02,** A 01 B 33/06,
A 01 B 33/16

(54) Soil cultivating implements.

(30) Priority: **29.05.81 NL 8102623**

(43) Date of publication of application:
**08.12.82 Bulletin 82/49**

(45) Publication of the grant of the patent:
**31.07.85 Bulletin 85/31**

(84) Designated Contracting States:
**CH DE FR GB IT LI**

(56) References cited:
**FR-A-2 320 688**
**FR-A-2 342 628**
**FR-A-2 369 783**

(73) Proprietor: **C. van der Lely N.V.**
**Weverskade 10 P.O. Box 26**
**NL-3155 ZG Maasland (NL)**

(72) Inventor: **van der Lely, Cornelis**
**7 Brüschenrain**
**Zug (CH)**

(74) Representative: **Mulder, Herman et al**
**Octrooibureau Van der Lely N.V. Weverskade 10**
**P.O. Box 26**
**NL-3155 ZG Maasland (NL)**

Courier Press, Leamington Spa, England.

## Description

This invention relates to soil cultivating implements that comprise a plurality of soil working members journalled in a frame part that form a gearbox so as to be rotatable about upwardly extending axes and which also comprises a ground roller located behind the soil working members and gearbox with respect to the intended direction of operative travel of the implement, the said roller being bodily upwardly and downwardly displaceable relative to said members and gearbox by means of arms that are pivotable connected near the front side of the gearbox to an upright support secured to the upper part of the gearbox and extending throughout substantially the whole of the width of the gearbox, considered in the intending direction of operative travel of the implement.

An implement of the kind set forth is for instance known from the French Patent Specification 2.320.688.

With the construction according this patent application the arms are arranged along the outer side of a single support so that the stabilisation effect in particular with machines having a large working width may not be sufficient.

The invention has for its object to provide a reliable support for the pivotable arms by simple means.

In accordance with the invention a pair of said upright supports is provided for every arm whereby the arm or part of it fits between the said supports of a pair.

For a better understanding of the invention, and to show how the same may be carried into effect, reference will now be made, by way of example, to the accompaning drawings, in which:—

Figure 1 is a plan view of a soil cultivating implement in the form of a rotary harrow constructed in accordance with the invention shown connected to the rear of an agricultural tractor,

Figure 2 is a side elevation corresponding to Figure 1, and

Figure 3 is section, to an enlarged scale, taken on the line III—III in Figure 1,

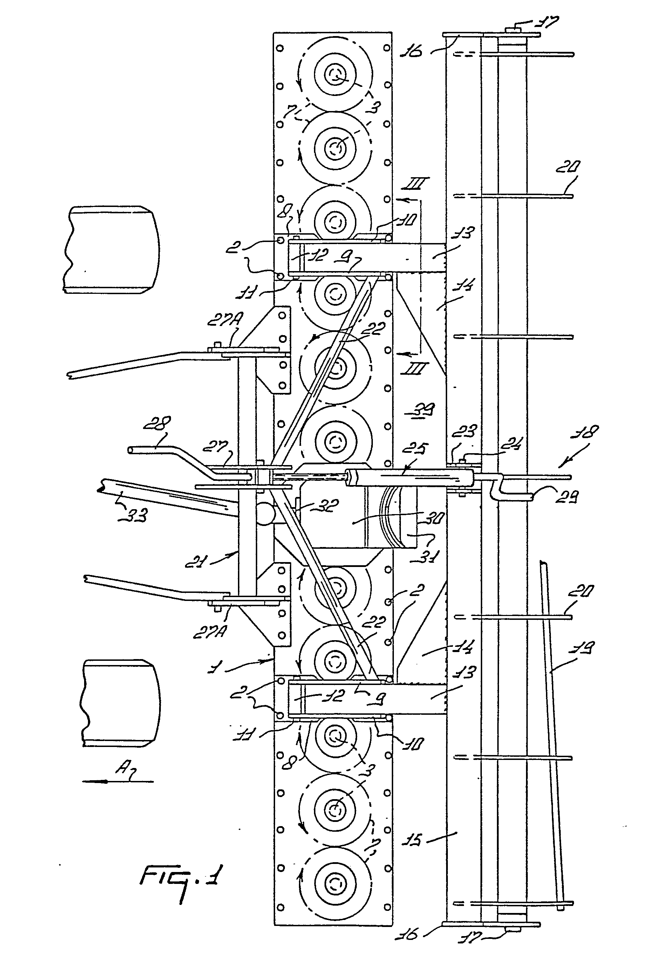

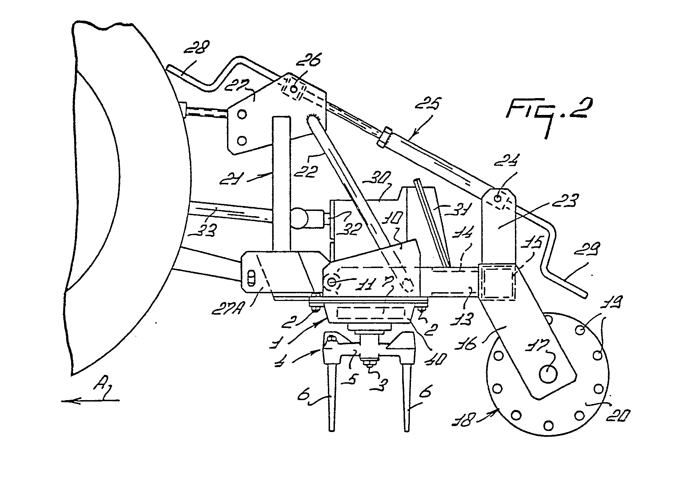

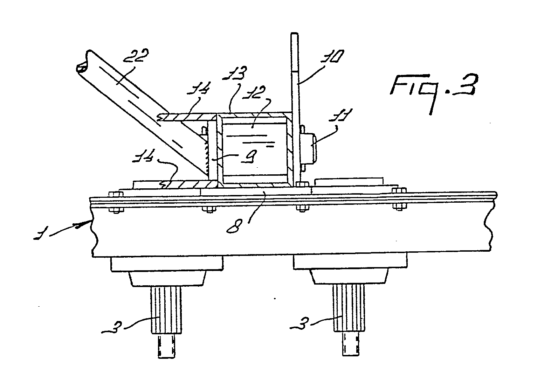

Referring firstly to Figures 1 to 3 inclusive of the accompanying drawings, the soil cultivating implement that is illustrated therein is in the form of a rotary harrow and comprises a hollow box-section frame portion 1 of elongate configuration that extends substantially horizontally transverse and usually, as illustrated, substantially horizontally perpendicular to the intended direction of operative travel of the implement that is indicated in Figures 1 and 2 of the drawings by an arrow A. The hollow frame portion 1 takes the form of an assembly of plates that includes a lower substantially channel-shaped plate having horizontal flanges to which an upper planar and substantially horizontally disposed cover plate is firmly but releasably secured by a plurality of substantially regularly spaced apart and substantially vertically disposed bolts 2. A plurality, of which there are twelve in the example that is being described, of upwardly extending shafts 3 are rotatably journalled in bearings carried by the upper and lower walls of the frame portion 1 in such a way that their axes of rotation are contained in a single plane that is parallel to the transverse length of the frame portion 1 with the parallel axes of rotation regularly spaced apart from one another in said plane by distances which advantageously, but not essentially, have magnitudes of substantially 25 centimetres. In the embodiment which is being described, each shaft 3 is vertically or substantially vertically disposed. The lowermost end of each shaft 3 projects downwardly from beneath the bottom of the hollow frame portion 1 and there has the hub of a corresponding rotary soil working member 4 firmly but releasably secured to it in such a way that each member 4 cannot move either rotatably or axially relative to the shaft 3 concerned. Each rotary soil working member 4 comprises a substantially horizontally disposed carrier 5 at the opposite ends of which are rigidly or integrally mounted two sleeve-like holders in which upper fastening portions of rigid cultivating members in the form of tines 6 are firmly but releasably secured. Each shaft 3 is provided, inside the hollow frame portion 1, with a corresponding straight-toothed or spur-toothed pinion 7, the sizes of the twelve (in this embodiment) pinions 7 being such that, as diagrammatically illustrated in Figure 1 of the drawings, the teeth of each pinion 7 are in driven and/or driving and driven mesh with those of the or each immediately neighbouring pinion in the single row thereof that is contained within the hollow frame portion 1. It will be seen that, with this arrangement, each pinion 7, together with the corresponding shaft 3 and rotary soil member 4, will revolve, during the operation of the implement, in a direction which is opposite to the direction of rotation of the or each immediately neighbouring similar assembly, small arrows in Figure 1 of the drawings indicating the directions of operative rotation.

The opposite ends of the hollow frame portion 1 are closed by simple upright plates 40 (Figure 2) of inverted trapeziform shape and, at two locations which are substantially one quarter of the distance from one end of the frame portion 1 towards the opposite end thereof, two substantially horizontally disposed plates 8 are mounted on top of the cover plate of the hollow frame portion 1, the two plates 8 being secured to the hollow frame portion 1 by appropriately positioned ones of the bolts 2 that secure the cover plate of the frame portion 1 to the underlying substantially channel-shaped part thereof. As seen in plan view (Figure 1), the two plates 8 are located midway between the shafts 3 that correspond to the third and fourth rotary soil working members 4 along the single row thereof counting from corresponding ends of that row.

Each substantially horizontal plate 8 is provided, adjacent to the opposite edges thereof that extend parallel or substantially parallel to the direction A, with inner and outer (with respect to the centre of the frame portion 1) upright supports 9 and 10 that are substantially vertically parallel to one another and to the direction A and that extend throughout most, but not all, of the lengths of the hollow frame portion 1 as measured in the direction A. It will be seen from the drawings that, whilst the upper and lower edges of the two inner supports 9 are substantially horizontally parallel to one another, the upper edge of each outer support 10 is downwardly and forwardly inclined from rear to front with respect to the direction A. As seen in plane view (Figure 1), a strong horizontal pivot pin 11 interconnects the leading ends of the two inner and outer upright supports 9 and 10 of each pair and extends substantially parallel to the transverse length of the horizontal frame portion 1 at a location above and towards the front of that frame portion 1 with respect to the direction A. Each of the two substantially coaxial pivot pins 11 is surrounded, between the corresponding pair of supports 9 and 10, by a horizontal sleeve 12 to which is secured the leading end of a rearwardly extending arm 13 which is in the form of a hollow beam of rectangular, and preferably square, cross section, said beam thus being of a construction that is resistant to torsional deformation. The rearmost ends of the two arms 13, which are behind the hollow frame portion 1 with respect to the direction A, are coupled to a carrier 15 of hollow formation and square cross section (see Figure 2) by means which includes upper and lower pairs of parallel strengthening plates 14. As can be seen in the drawings, the two upper and lower strengthening plates 14 of each pair are located at the inner and relatively facing sides of the two arms 13. The formation of the carrier 15 is such that said carrier has a strong resistance to torsional deformation, it being possible for it to have a rectangular, rather than strictly square, cross section, if preferred. The carrier 15 has substantially the same length in a horizontal direction that is perpendicular to the direction A as does the hollow frame portion 1 and its opposite ends substantially register in the direction A, with the opposite ends of the frame portion.

The free ends of the carrier 15 carry downwardly and rearwardly, with respect to the direction A, support plates 16 (Figures 1 and 2), each support plate 16 being substantially rectangular as seen in side elevation (Figure 2). A ground roller 18 is mounted in a freely rotatable manner between substantially horizontal bearings carried at the rearmost and lowermost ends of the two support plates 16, stub shafts 17 at the opposite ends of the roller 18 being arranged to co-operate rotatably with said bearings. The ground roller 18 comprises a central axially extending shaft to which a plurality, such as seven, of circular support plates 20 are secured at regularly spaced apart intervals which are such that one of said support plates 20 is located close to each opposite end of the roller 18. Each circular support plate 20 is formed, close to its edge, with a plurality, such as ten, of regularly spaced apart holes through which elongate elements 19 of tubular or rod formation are entered in such a way as, preferably, to extend helically around the axis of rotation of the ground roller 18. The elongate elements 19 are releasable from the roller 18 and the maximum possible number, or a reduced number, thereof may be employed having regard to the nature and condition of the soil that is to be dealt with by the implement.

Brackets that are secured to the top and front of the hollow frame portion 1, with respect to the direction A, secure a coupling member or trestle 21 to that frame portion 1 at a location midway between the opposite lateral sides or ends thereof, said coupling member or trestle 21 being of generally triangular configuration as seen in front or rear elevation. Tie beams 22 interconnect plates at the apex of the coupling member or trestle 21 and the two inner upright supports 9. The plates at the apex of the coupling member or trestle 21 include apertured lugs 27 arranged to co-operate pivotally with the upper lifting link of a three-point lifting device or hitch carried by an agricultural tractor or other operating vehicle of the implement. Lower portions of the coupling member or trestle 21 carry forwardly projecting lugs 27A to which the two lower lifting links of the same three-point lifting device or hitch can be connected in the generally known manner that is illustrated in outline in Figures 1 and 2 of the drawings employing substantially horizontally aligned pivot pins.

Two horizontally spaced apart lugs 23 project substantially vertically upwards in parallel relationship with one another at a location midway along the transverse length of the upper surface of the beam which affords the carrier 15. Substantially horizontally aligned trunnion pins 24 turnably mount an adjustment mechanism 25 between the upper ends of the two lugs 23. The adjusting mechanism 25 is of a basically known kind which incorporates a screw-threaded rod which can be rotated in a matchingly screw-threaded part of a cylinder to increase, or decrease, the effective lengths of the mechanism 25, as may be required. In this case, however, and that is the subject-matter of a divisional application (filing number: 84201101.7), the screw-threaded rod of the mechanism 25 projects from both opposite axial ends of the cylinder and is provided, at those ends, with corresponding upper and lower crank handles 28 and 29. An upper non-threaded portion of the screw-threaded rod passes between the lugs 27 at the top of the coupling member or trestle 21, a block being arranged around said portion of the rod at this point by way of a plain internal bore through which the rod is entered. The block is turnably connected to the two lugs 27 by a pair of horizontally aligned trunnion pins 26 and means are arranged so that the rod of the adjustment mechanism 25 can rotate freely in the block but cannot move axially relative thereto to any significant extent. It will be apparent that the rod of the mechanism 25 can be rotated from either end by adjusting the upper crank handle 28 or the lower crank handle 29, the upper crank handle 28 being adjacent to the upper coupling point of the coupling member or trestle 21 and almost always being accessible from the driving seat of an agricultural tractor that is used to move and operate the implement without the driver of that tractor actually having to leaves his/her seat. The lower crank handle 29 is disposed substantially vertically above the ground roller 18 and can conveniently be manipulated by an operator standing on the ground immediately to the rear of the centre of the implement. It will be apparent that rotating the rod of the adjustment mechanism 25 in an appropriate direction will either increase or decrease the distance between the pair of trunnion pins 24 and the pair of trunnion pins 26. This change in the effective length of the mechanism 25 can only be accommodated by turning the arms 13, the carrier 15 and the roller 18 upwardly or downwardly about the substantially horizontally aligned pivot pins 11. If the roller 18 is moved upwardly relative to the frame portion 1 and rotary soil working members 4, then the tines 6 of those members 4 will be able to penetrate more deeply into the ground during the operation of the implement and, conversely, if the roller 18 is lowered relative to the frame portion 1 and soil working members 4, the maximum depth of penetration of the tines 6 into the soil which is possible will be reduced. It is noted that, as seen in Figure 2 of the drawings, the roller 18 is shown turned downwardly about the aligned pivot pins 11 to the maximum possible extent in which position of adjustment the lower faces of the arms 13 are in contact with the upper surfaces of the plates 8 on the hollow frame portion 1.

One of the centre pair of rotary shafts 3 in the single row of those shafts is extended upwardly through the cover plate of the hollow frame portion 1 into a gear box 30 that is mounted on top of the hollow frame portion 1. A shaft and bevel pinion transmission within the gear box 30 places the upward extension of said shaft 3 in driven connection with a horizontally disposed rotary input shaft 32 of the gear box 30 that projects forwardly from the front of the gear box 30 in a horizontal direction that is parallel or substantially parallel to the direction A. The rotary input shaft 32 and an underlying parallel shaft that is not visible in the drawings have rearmost ends which project into a change-speed gear 31 that is mounted at the back of the gear box 30 which respect to the direction A. The ends of these two shafts are splined and co-operate with the matching internally splined hubs of pairs of toothed pinions of different sizes. The transmission ratio between the two shafts in the gear box 30, and thus the speed at which the soil working members 4 will be rotated in response to a substantially fixed speed of driving rotation that is applied to the leading end of the shaft 32, when the implement is in operation, will depend upon the particular pair of toothed pinions which is mounted on the splined ends of the two shafts that are accessible in the change-speed gear 31 and on the arrangement of those two pinions that is employed, it being noted that the two pinions of any particular pair are interchangeable on the shaft ends. When the implement is in operation, drive is applied to the forwardly projecting splined or otherwise keyed end of the rotary input shaft 32 of the gear box 30 by a telescopic transmission shaft 33, which is of a construction that is known *per se* having universal joints at its opposite ends. The leading end of the telescopic transmission shaft 33 is, of course, connected to the rear power take-off shaft of the agricultural tractor or other vehicle which moves and operates the implement.

In the use of the soil cultivating implement (rotary harrow) that has been described with reference to Figures 1 to 4 of the accompanying drawings, its coupling member or trestle 21 is connected to the three-point lifting device or hitch at the rear of an agricultural tractor or other operating vehicle and the telescopic transmission shaft 33 is employed to place the rotary input shaft 32 of the gear box 30 in driven connection with the rear power take-off shaft of the same agricultural tractor or other operating vehicle. Adjustments that may, if required, be made before work commences include altering the transmission ratio in the change-speed gear 31 in the manner described above and using the adjustment mechanism 25 to increase the maximum depth of penetration of the tines 6 into the soil which is possible. These adjustments will usually be made having regard to the nature and condition of the soil that is to be cultivated by the implement. As the implement moves forwardly in the direction A over soil that is to be cultivated, each rotary soil working member 4 works a corresponding strip of soil that extends in the direction A and, since the distance between the tines 6 of each member 4 is a little greater than is the distance between the longitudinal axes (axes of rotation) of immediately neighbouring shaft 3, said strips of soil overlap one another to produce a single broad strip of worked soil which, in the case of the implement that is being described by way of example, will have a width substantially, although not necessarily exactly, three metres. It is the position of the axis of rotation of the rear-mounted ground roller 18 relative to the rotary soil working members 4 that primarily determines the maximum depth to which the tines 6 of the members 4 can penetrate into the ground and the form of connection of the roller 18 to the frame portion 1 that has been described enables a very fine adjustment easily to be made either from the driving seat of the tractor by way of the crank handle 28 or, when the implement is at rest, from behind the roller 18 by way of the crank handle 29 and it is noted that any selected adjustment setting is maintained in a very stable manner whilst the implement is in operation, this being most important when, for example, the implement is being used to prepare a seed bed. The arms 13 are very resistant to torsional deformation and extend forwardly over the top of the hollow frame portion 1 whilst fitting closely between the corresponding pairs of inner and outer upright supports 9 and 10. This arrangement enables any desired depth setting to be chosen and maintained in a stable manner without there being any significant tendency for one end of the roller 18 to be at a different level, relative to the frame portion 1, as compared with the opposite end thereof.

Since the arms 13 which connect the carrier 15 of the roller 18 to the frame portion 1 are located well inwardly towards the centre of the implement from its opposite lateral sides, it is not necessary that the ends of the elongate hollow frame portion 1, which constitutes a gear box of the implement, should be constructed with a high level of resistance to torsional deformation for themselves, and for roller-supporting arms which they would otherwise carry, in mind. Such known implements usually employ welded end plates for co-operation with the roller-supporting arms but this is not necessary in the present case and the manufacture of the hollow frame portion 1, in particular, is thus simplified and rendered less expensive, the previously mentioned simple upright plates 40 (Figure 2) being entirely adequate to close the ends of the hollow frame portion 1. It will be noted that the two pivot pins 11 that define the substantially horizontal axis about which the arms 13 are upwardly and downwardly turnable relative to the frame portion 1 are located quite close to respective ones of the two horizontally spaced apart lower coupling points at which, in use, the lower lifting links of the three-point lifting device or hitch of the tractor or other operating vehicle are releasably coupled to the frame portion 1. During operation, reaction forces are transferred between the coupling member or trestle 21 and a support 39 (Figure 1) of the roller 18 without the frame portion 1 itself having to have a very high resistance to bending and/or torsional deformation. The support 39 comprises the arms 13, the strengthening plates 14 and the roller carrier 15. The described construction enables the implement to operate in a very stable manner whilst being resistant to damage by forces to which it is subject directly, or *via* the operating tractor or other vehicle, as a result of soil undulations, stones, buried roots and the like.

**Claims**

1. A soil cultivating implement which comprises a plurality of soil working members (4) journalled in a frame part (1) that forms a gearbox so as to be rotatable about upwardly extending axes and which also comprises a ground roller (18) located behind the soil working members and gearbox with respect to the intended direction of operative travel of the implement, the said roller (18) being bodily and downwardly displaceable relative to said members and gearbox by means of arms (13) that are pivotable connected near the front side of the gearbox to an upright support (9, 10) secured to the upper part of the gearbox and extending throughout substantially the whole of the width of the gearbox, considered in the intending direction of operative travel of the implement, characterized in that a pair of said upright supports (9, 10) is provided for every arm (13) whereby the arm (13) or part of it fits between the said supports (9, 10) of a pair.

2. A soil cultivating implement according to claim 1, characterized in that the said arms (13) fit exactly between the said supports (9, 10) of a pair.

3. A soil cultivating implement according to claim 1 or 2, characterized in that the said arms (13) are arranged between the said supports (9, 10) throughout substantially the whole of the width of the said gearbox (1) considered in the intended direction of operative travel of the implement.

4. A soil cultivating implement according to any one of the preceding claims, wherein the said arms (13) are afforded by hollow beams with a rectangular cross section.

**Revendications**

1. Outil de culture du sol comprenant plusieurs organes de travail du sol (4) montés de manière à pouvoir tourner autour d'axes s'étendant vers le haut sur un châssis (1) qui forme une boîte d'engrenages, et comprenant également un rouleau de sol (18) situés à l'arrière des organes de travail du sol et de la boîte d'engrenages par rapport à la direction prévue pour le déplacement de travail de l'outil, ledit rouleau (18) étant mobile dans son ensemble et vers le bas par rapport auxdits organes et à la boîte d'engrenages au moyen de bras (13) qui sont reliés de façon pivotante à proximité du côté avant de la boîte d'engrenages sur un support vertical (9, 10) fixé à la partie supérieure de la boîte d'engrenages et s'étendant sensiblement sur la totalité de la largeur de la boîte d'engrenages, considérée dans la direction prévue pour le déplacement de travail de l'outil, caractérisé en ce qu'une paire desdits supports verticaux (9, 10) est prévue pour chaque bras (13), le bras (13) ou une partie de celui-ci s'emboîtant entre lesdits supports (9, 10) d'une paire.

2. Outil de culture du sol selon la revendication 1, caractérisé en ce que lesdits bras (13) s'emboîtent exactement entre lesdits supports (9, 10) d'une paire.

3. Outil de culture du sol selon la revendication 1 ou 2, caractérisé en ce que lesdits bras (13) sont disposés entre lesdits supports (9, 10) sensiblement sur la totalité de la largeur de ladite boîte d'engrenages (1), considérée dans la direction prévue pour le déplacement de travail de l'outil.

4. Outil de culture du sol selon l'une quelconque des revendications précédentes, caractérisé en ce que lesdits bras (13) sont constitués par des poutres creuses de section rectangulaire.

**Patentansprüche**

1. Bodenbearbeitungsvorrichtung, die eine Anzahl von Bodenbearbeitungsgliedern (4) aufweist, welche in einem Gestellteil (1) gelagert sind, das einen Getriebekasten bildet, und die um aufwärts gerichtete Achsen drehbar sind, sowie mit einer Bodenwalze (18), die — bezogen auf die beabsichtigte Arbeitsrichtung der Vorrichtung — hinter den Bodenbearbeitungsgliedern und dem Getriebekasten angeordnet ist, wobei die genannte Walze (18) als Einheit und relativ zu den genannten Gliedern und dem Getriebekasten abwärts verstellbar ist mittels Armen (13), die nahe der Stirnseite des Getriebekastens schwenkbar mit einer aufrechten Stütze (9, 10) verbunden sind, welche auf der Oberseite des Getriebekastens befestigt ist und sich im wesentlichen über die ganze Breite des Getriebekastens erstreckt, bezogen auf die beabsichtigte Arbeitsrichtung der Vorrichtung, dadurch gekennzeichnet, daß für jeden Arm (13) ein Paar der genannten aufrechten Stützen (9, 10) vorgesehen ist, wobei der Arm (13) oder ein Teil von ihm zwischen die Stützen (9, 10) eines Paares passend eingreift.

2. Bodenbearbeitungsvorrichtung nach Anspruch 1, dadurch gekennzeichnet, daß die genannten Arme (13) genau zwischen die genannten Stützen (9, 10) eines Paares passen.

3. Bodenbearbeitungsvorrichtung nach Anspruch 1 oder 2, dadurch gekennzeichnet, daß die genannten Arme (13) zwischen den genannten Stützen (9, 10) im wesentlichen über die ganze Breite des genannten Getriebekastens (1) angeordnet sind, bezogen auf die beabsichtigte Arbeitsrichtung der Vorrichtung.

4. Bodenbearbeitungsvorrichtung nach einem der vorhergehenden Ansprüche, bei der die genannten Arme (13) durch Hohlbalken mit rechteckigem Querschnitt gebildet sind.

FIG.1

FIG.2

Fig.3